# EUROPÄISCHE PATENTSCHRIFT

(11) **EP 1 577 126 B1**
(45) Veröffentlichungstag und Bekanntmachung des Hinweises auf die Patenterteilung: **03.09.2008**
(21) Anmeldenummer: 05001157.6
(22) Anmeldetag: 21.01.2005
(51) Int. Cl.: B60G 21/05, B60G 7/02, F16F 1/387, F16F 1/38

(54) **Elastomerlager**
Elastomeric mounting
Support en élastomère

(30) Priorität: 19.03.2004 DE 102004013554
(43) Veröffentlichungstag der Anmeldung: 21.09.2005
(73) Patentinhaber: AUDI AG, 85045 Ingolstadt (DE)
(72) Erfinder: Lamers, Stephan, 93336 Altmannstein (DE); Leitner, Wilfried, 85072 Eichstätt (DE); Michels, Stefan, 85114 Buxheim (DE)
(74) Vertreter: Asch, Konrad

(56) Entgegenhaltungen:
- EP-A- 0 300 093
- EP-A- 0 542 626
- DE-A1- 3 613 123
- DE-A1- 10 157 712
- DE-C1- 4 139 582
- DE-U- 7 141 159

## Beschreibung

Die Erfindung betrifft ein Elastomerlager gemäß dem Oberbegriff des Patentanspruches 1.

Solche vorzugsweise im Kraftfahrzeugbau eingesetzten, als Stossdämpfer, Achsführungselemente sowie auch als Gummimetalllager verwendeten Elastomerlager sind vielfach bekannt. Sie dienen bei der schwenkbaren Lagerung von Radführungsgliedern der gleichzeitigen Abfederung und Dämpfung von störenden Laststößen und zur gleichzeitigen Verminderung von Fahrgeräuschen. Die Federeigenschaft der Elastomerlager wird bei Achsen in Fahrzeugen auch gezielt dazu verwendet, die Achskinematik und somit die Radstellung, das heißt Spur, Sturz, Längs-, Quer- und Vertikalverschiebung, passiv in Abhängigkeit der unterschiedlichen und zeitlich variierenden auf das Rad und die Achse einwirkenden Kräfte zu bringen. Dazu werden besondere und üblicherweise gleichzeitig unterschiedliche und nicht immer zu vereinbarende Anforderungen an die Feder- und Dämpfeigenschaften des Elastomerlagers in die jeweils drei translatorischen und jeweils drei rotatorischen Raumrichtungen gestellt.

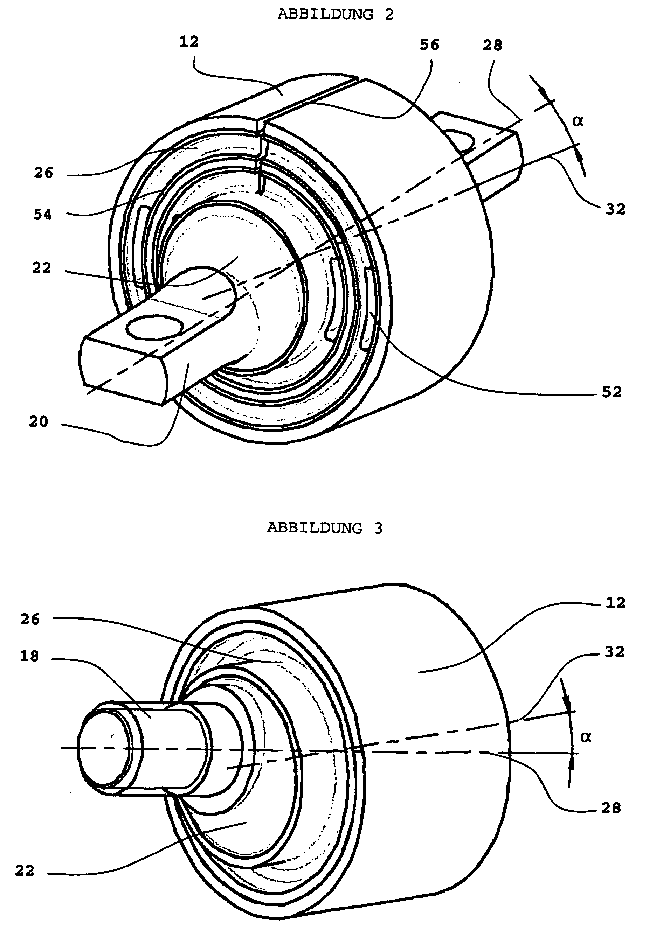

Das gattungsbildende, als Drehgleitlager für die Stützachsen des Fahrwerks eines Kraftfahrzeuges ausgebildete Elastomerlager gemäß der DE 36 13 123 C2 hat die Aufgabe, bei großer axialer Verschiebbarkeit des zugehörigen Gelenkzapfens gegenüber dem äußeren Gehäuse bei kardanischen Auslenkungen keine Kippmomente auf die Gleitbuchse des Lagers wirksam werden zu lassen. Hierzu ist ein ringförmiger Elastomerkörper vorgespannt haftend zwischen einem inneren Tragzapfen und einem demgegenüber axial beweglichen äußeren Gehäuse unter Zwischenlage einer auf einer Gleitfläche des Gehäuses oder des Tragzapfens axial verschiebbaren Gleitbüchse angeordnet. Der innere Tragzapfen dieses Elastomerlagers kann - wie dort die Figuren 3 und 4 zeigen - eine zum Drehlager des Elastomerlagers nicht koaxiale Bohrung aufweisen. Zwischen der Gleitfläche und dem Elastomerkörper ist eine die Gleitbüchse umschließende, mit dem Elastomerkörper verbundene zwischenhülse angeordnet, durch die Verformungen des Elastomerkörpers sowie Dreh-und Gleitbewegungen strikt von einander getrennt werden sollen.

Eine solche Ausbildung hat aber, wie die Erfahrung gezeigt hat, den Nachteil, dass die Axialsteifigkeit des Elastomerkörpers undefiniert wird. Dies ist bei einer elastokinematischen Fahrwerkauslegung für Achslenker unerwünscht, da oft eine hohe Steifigkeit in Lenkerrichtung, das bedeutet zwischen einem karosserieseitigen und einem radseitigen Kinematikpunkt, angestrebt wird, wobei die torsionale und kardanische Steifigkeit der Lager möglichst gering sein soll. Wird berücksichtigt, dass konventionelle Elastomerlager tendenziell in radialer Richtung deutlich steifer sind als in axialer Richtung und das die torsionale Steifigkeit in der Regel deutlich geringer ist als die kardanische, so liegt nahe, dass in der Regel versucht wird, die Lager so auszurichten, dass die Hauptbeanspruchungen und - belastungen translatorisch in radialer Richtung und rotatorisch in torsionaler Richtung liegen.

Die bekannten Elastomerlager können aber, wie die Erfahrung gezeigt hat, wegen äußerer Zwänge nicht immer in einer optimalen Ausrichtung in Radträger, Achslenker, Aggregateträger und weitere Bauteile eines Fahrwerks eingebaut werden.

Hier Abhilfe durch ein neues Elastomerlager unter Anwendung der nicht koaxialen Ausrichtung von Drehlager des Elastomerlagers und der Lagerbohrung seines inneren Lagerbauteils zu schaffen ist Aufgabe der Erfindung.

Ausgehend von einem Elastomerlager der eingangs genannten Art ist diese Aufgabe erfindungsgemäß durch die kennzeichnenden Merkmale des Patentanspruches 1 gelöst.

Weitere Merkmale der Erfindung ergeben sich aus den Unteransprüchen.

Gemäß der Erfindung ist also zusätzlich zur Lagerhauptachse, um die der den Elastomerkörper aufnehmende Elastomerkörperraum konstruiert ist und welche die Axialrichtung des Lagers vorgibt, dem Lagerkern eine weitere, sogenannte innere Anbindungsachse definiert zugeordnet, an der die Funktionsflächen des Lagerkerns, die der Anbindung des Lagers an weiter Bauteile dienen, ausgebildet sind, sodass eine durch den Elastomerkörper definierte Axialsteifigkeit erzielbar ist.

Die Lagerhauptachse und die innere Anbindungsachse lassen sich in einem dem Elastomerlager zugeordneten, dreidimensionalen Koordinatensystem vektoriell beschreiben und zeichnen sich durch den Verkantwinkel **α > 0** und den Abstand **a** > **0** aus.

Der Elastomerkörperraum des erfindungsgemäßen Lagers gleicht in der Gestaltung demjenigen konventioneller, dem Stand der Technik entsprechender Lager, wobei als Elastomerkörperraum bei einem solchen Lager der Raum bezeichnet wird, der durch die am äußeren Lagerbauteil anliegende äußere Lagerfläche und die am inneren Lagerbauteil anliegende innere Lagerfläche begrenzt wird und dem Elastomerkörper beim unbelasteten Lager in diesem Bereich zur Verfügung steht. Bei der Lagerhauptachse handelt es sich daher in der Regel um die Rotationsachse der in der Regel als Rotationsfläche ausgebildeten äußeren Lagerfläche bzw. um eine Parallele zu dieser. Zur Modifikation der Lagereigenschaften kann die Rotationsfläche Aussparungen oder Ausbuchtungen, und/oder unterschiedliche Radien und Fasen im Randbereich haben. Bei wesentlichen Bestandteilen der äußeren Lagerfläche kann es sich aber auch um Extrusions- oder Kegelflächen handeln, deren Konstruktionsachse die Lagerhauptachse oder eine Parallele dazu ist.

Weitere geometrische Ausführungen des Elastomerkörperraums, die sich eindeutig und logisch sinnvoll auf die Lagerhauptachse beziehen sind denkbar.

Bei den an der inneren Anbindungsachse ausgerichteten Funktionsflächen zur Anbindung des Lagers an weitere Bauteile handelt es sich um eine Lagerkernbohrung, ein oder zwei Lagerkernlaschen oder ein oder zwei Lagerkernzapfen.

Durch die erfindungsgemäße Ausbildung des Elastomerlagers mit nicht koaxialer Ausrichtung von Lagerhauptachse und innerer Anbindungsachse, die eine aus vorgegebenen Konstruktionsdaten vorbestimmte Lage im definierten Konstruktionsraum einnehmen, kann das Elastomerlager der erfindungsgemäßen Art eine optimale Funktionsausrichtung für den vorgegebenen Anwendungszweck erhalten, unter Berücksichtigung von funktions-, montage-, festigkeits- und fertigungstechnischen Notwendigkeiten. Das Lager kann auf diese Weise zum Beispiel so ausgerichtet werden, dass es nur minimale Kräfte in Richtung der Lagerhauptachse übertragen muß.

Die Erfindung ist nachfolgend anhand von einem im Schnitt und in räumlicher Ansicht und zwei nur in räumlicher Ansicht dargestellten Ausführungsbeispielen beschrieben.

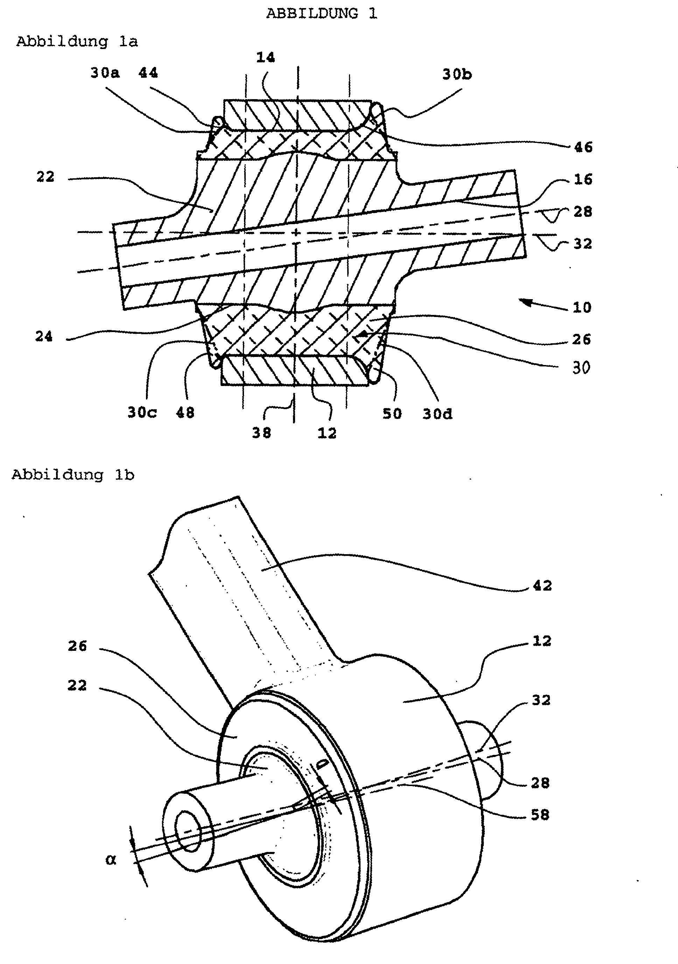

Ein in Abbildung 1a und 1b im Schnitt und in räumlicher Ansicht dargestelltes Elastomerlager 10, auch als Gummimetalllager bezeichnet, umfaßt ein äußeres Lagerbauteil 12 mit einer Lagerfläche 14 und ein eine Lagerbohrung 16 aufweisendes inneres Lagerbauteil 22 mit einer Lagerfläche 24, zwischen denen ein Elastomerkörper 26 eingespannt ist, der elastische Bewegungen zwischen dem inneren und äußeren Lagerbauteil ermöglicht. Die im inneren Lagerbauteil 22 befindliche Lagerbohrung 16 weist eine zentrale innere Anbindungsachse 28 und der sich zwischen dem äußeren Lagerbauteil 12 und dem inneren Lagerbauteil 22 befindende Elastomerkörperraum 30 eine Lagerhauptachse 32 auf, wobei die innere Anbindungsachse 28 und die Lagerhauptachse 32 einen Abstand **a** > **0** und einen Verkantwinkel **α > 0** zueinander aufweisen. Die Lagerhauptachse 32 ist die Rotationsachse der äußeren Lagerfläche 14. Eine schräg zur inneren Anbindungsachse 28, aber orthogonal zur Richtung der Lagerhauptachse 32 über das äußere Lagerbauteil 12 eingebrachte Kraft, das bedeutet bei üblicher Auslegung in Achslenkerrichtung 38, wird bei dieser Konstruktion radial über den im vergleich zur axialen Elastizität radial deutlich steiferen Elstaomerkörper 26 auf das innere Lagerbauteil 22 übertragen. Durch das erfindungsgemäße Lager ist also eine deutlich höhere Steifigkeit des Lagers in Kraft-, d. h. in Achslenkerrichtung erzielbar, als bei einem konventionellen, schräg in Richtung der Anbindungsachse angebundenen Lager mit gleichem Elastomerkörper.

Die in Abbildung 1b dargestellte Gerade 58 ist eine Parallele zur inneren Anbindungsachse 28, welche die Hauptlagerachse 32 im Punkt des kürzesten Abstandes **a** der Hauptlagerachse 32 zur inneren Anbindungsachse 28 schneidet.

Bei der in Abbildung 1b dargestellten Erfindungsvariante ist das Umgebungsbauteil 42 durch eine entsprechende mechanische Bearbeitung, welche die äußere Lagerfläche 14 darstellt, gleichzeitig äußeres Lagerbauteil 12. Der am inneren Lagerbauteil 22 anvulkanisierte Elastomerkörper 26 ist bei dieser Variante in das äußere Lagerbauteil 12 eingepresst. Die innere Lagerfläche 24 hat abweichend zu einer rein zylindrischen Form Erhebungen zur Einstellung einer speziellen Federeigenschaft des Elastomerkörpers 26. Aus Montage- und Funktionsgründen sind die am äußeren Lagerbauteil 12 angebrachten und innerhalb des Elastomerkörperraums 30 liegenden Stirnflächenradien I 44 und II 46 unterschiedlich. Weiterhin hat der Elastomerkörper 26 an den Stirnseiten Bereiche 48, 50 die außerhalb des Elastomerkörperraums liegen.

In Abbildung 2 wird eine Erfindungsvariante dargestellt, die zur Anbindung des inneren Lagerbauteils 22 an ein weiteres Achsbauteil Lagerlaschen 20 aufweist. Weiterhin enthält dieses Lager der Modifikation der Lagereigenschaft dienende Nieren 52 und aus gleichem Grund eine Zwischenhülse 54. Um bei der Lagermontage eine hohe Vorspannung in das Elastomer zu bekommen, ist diese Erfindungsvariante des Lagers geschlitzt ausgeführt. Die Flächen des Schlitzes 56 liegen bei dieser Erfindungsvariante im montierten Zustand aneinander an.

In Abbildung 3 wird eine Erfindungsvariante dargestellt, die zur Anbindung des inneren Lagerbauteils 22 an ein weiteres Achsbauteil einen Lagerzapfen 24 aufweist.

Zwecks Modifikation der Lagereigenschaften des Elastomerlagers 10, kann der Elastomerkörper 26 in verschiedenen, dem Stand der Technik entsprechenden Varianten ausgeführt sein. So kann er zum Beispiel als Nieren bezeichnete Aussparungen beinhalten, die weiterhin innere Anschläge haben können. In den Elastomerkörper 26 können Metall- oder Kunststoffteile eingelegt sein. Der Elastomerkörper kann geschlitzt sein. Der Elastomerkörper kann als sogenanntes Hydrolager mit eingeschlossenem Fluid dargestellt sein, um spezielle Dämpfungswerte des Lagers zu erzielen. Der Elastomerkörper kann weiterhin an der äußeren Lagerfläche 14 oder an der inneren Lagerfläche 24 eine Gleitfläche aufweisen. Falls keine Gleitfläche gewünscht ist, kann die Befestigung des Elastomerkörpers 26 an das innere Lagerbauteil 22 und/oder an das äußere Lagerbauteil 12 durch Vulkanisierung, durch Klebung, durch Presspassung und in ähnlicher, an sich bekannter Weise ausgeführt sein.

### BEZUGSZEICHENLISTE

- 10: Elastomerlager
- 12: äußeres Lagerbauteil
- 14: äußere Lagerfläche
- 16: Lagerbohrung
- 18: Lagerzapfen
- 20: Lagerlaschen
- 22: inneres Lagerbauteil
- 24: innere Lagerfläche
- 26: Elastomerkörper
- 28: innere Anbindungsachse
- 30: Elastomerkörperraum
- 30a,b,c,d: Grenzen des Elastomerkörperraum
- 32: Lagerhauptachse
- 38: Achslenkerrichtung
- 42: Umgebungsbauteil
- 44: Stirnflächenradius I
- 46: Stirnflächenradius II
- 48: außen liegender Elastomerkörperbereich
- 50: außen liegender Elastomerkörperbereich
- 52: Niere
- 54: Zwischenhülse
- 56: Längsschlitz
- 58: Parallele zur Anbindungsachse

## Patentansprüche

1. Elastomerlager (10) mit einem zwischen einem äußeren und einem inneren Lagerbauteil (12, 22) angeordneten, elastische Bewegungen zwischen den Lagerbauteilen ermöglichenden Elastomerkörper (26), der zwischen den zugewandten Lagerflächen (14, 24) der Lagerbauteile (12, 22) eingespannt ist und dessen als Lagerhauptachse dienende Achse (32) mit der Achse (28) der Lagerbohrung (16) des inneren Lagerbauteiles einen Winkel einschließt, **dadurch gekennzeichnet, dass** zwecks Funktionsausrichtung des Elastomerlagers (10), bezüglich der in Achsrichtung (38) wirkenden kräfte dessen Lagerbohrung (16) mit ihrer als innere Anbindungsachse dienenden Achse (28) eine an dieser ausgerichtete, der Kopplung des Elastomerlagers (10) an weitere Bauteile dienende Funktionsfläche bildet, unabhängig von der Achse (28) des inneren Lagerbauteiles (22) die auf die Lagerfläche (14) des äußeren Lagerbauteiles (12) bezogene Lagerhauptachse (32) zur Achse (28) des inneren Lagerbauteiles (22) einen Verkantwinkel α **> 0** und einen Abstand **a** > **0** aufweist.

2. Elastomerlager nach Anspruch 1, **dadurch gekennzeichnet, dass** die an der inneren Anbindungsachse (28) ausgerichtete der Kopplung des Elastomerlagers (10) an weitere Bauteile dienende Funktionsfläche als ein Lagerzapfen (18) oder als ein oder zwei Lagerlaschen 20 ausgebildet ist.

3. Elastomerlager nach den Ansprüchen 1 und 2, **dadurch gekennzeichnet, dass** das die äußere Lagerfläche (14) aufweisende äußere Lagerbauteil (12) als eine an der inneren Anbindungsachse (28) ausgerichtete Funktionsfläche (42) ausgebildet ist, welche ein Achslenker, ein Radträger, eine Pendelstütze, ein Aggregateträger oder ein ähnliches Funktionsbauteil verkörpert.

4. Elastomerlager nach den Ansprüchen 1 bis 3, **dadurch gekennzeichnet, dass** der Elastomerkörper (26) der Modifikation der Lagereigenschaften dienende, mit Flüssigkeit gefüllte Hohlräume und ein zugehöriges Kanalsystem enthält.

## Claims

1. Elastomeric bearing (10) with an elastomeric body (26) arranged between an outer and an inner bearing component (12, 22) and facilitating elastic movements between the bearing components, which is mounted between the facing bearing surfaces (14, 24) of the bearing components (12, 22) and whose axis (32) serving as the main bearing axis encloses an angle with the axis (28) of the bearing bore (16) of the inner bearing component, **characterised in that** for the purposes of the functional alignment of the elastomeric bearing (10) with respect to the forces acting in the axial direction (38), whose bearing bore (16), with its axis (28) serving as an inner connection axis forms a functional surface aligned thereto and serving to join the elastomeric bearing (10) to further components, independently of the axis (28) of the inner bearing component (22) the main bearing axis (32) aligned to the bearing surface (14) of the outer bearing component (12) has a cant angle of α > 0 and a distance of a > 0 to the axis (28) of the inner bearing component (22).

2. Elastomeric bearing according to claim 1, **characterised in that** the functional surface aligned with the inner connection axis (28) and serving to join the elastomeric bearing (10) to further components is made as a bearing journal (18) or as one or two bearing lugs 20.

3. Elastomeric bearing according to claims 1 and 2, **characterised in that** the bearing component (12) that has the outer bearing surface (14) is made as a functional surface (42) aligned to the inner connection axis (28), which contains an axle guide, a wheel carrier, a pendulum support, a unit carrier or a similar functional component.

4. Elastomeric bearing according to claims 1 to 3, **characterised in that** the elastomeric body (26) contains fluid filled cavities serving to modify the bearing characteristics and an associated duct system.

## Revendications

1. Support en élastomère (10) comprenant un corps en élastomère (26) disposé entre un composant de support extérieur et un composant de support intérieur (12, 22), permettant des déplacements élastiques entre les composants de support, lequel corps est encastré entre les surfaces de support associées (14, 24) des composants de support (12, 22) et dont l'axe (32) servant d'axe principal de support définit avec l'axe (28) de l'alésage de support (16) du composant de support interne un angle, **caractérisé en ce qu'**afin d'orienter la fonction du support en élastomère (10), par rapport aux forces agissant dans la direction axiale (38), l'alésage de support (16) dudit support forme avec son axe (28) servant d'axe de liaison interne une surface fonctionnelle orientée sur ledit axe, servant au couplage du support en élastomère (10) sur d'autres composants, indépendamment de l'axe (28) du composant de support interne (22), l'axe principal de support (32) relatif à la surface de support (14) du composant de support extérieur (32) présentant par rapport à l'axe (28) du composant de support interne (22) un angle d'inclinaison α>0 et un écart a>0.

2. Support en élastomère selon la revendication 1, **caractérisé en ce que** la surface fonctionnelle orientée sur l'axe de liaison interne (28) servant au couplage du support élastomère (10) sur d'autres composants est conçue comme un tourillon (18) ou comme une ou deux pattes de support (20).

3. Support en élastomère selon l'une quelconque des revendications 1 et 2, **caractérisé en ce que** le composant de support extérieur (12) comprenant la surface de support extérieure (14) est conçu comme une surface fonctionnelle (42) orientée sur l'axe de liaison interne (28), laquelle surface représente un guide d'essieu, un support de roue, un support oscillant, un support de groupe ou un composant fonctionnel similaire.

4. Support en élastomère selon l'une quelconque des revendications 1 à 3, **caractérisé en ce que** le corps en élastomère (26) contient des cavités remplies de liquide et un système de canal associé servant à modifier les propriétés du support.
